# FASCICULE DE BREVET EUROPEEN

(11) **EP 3 240 460 B1**
(45) Date de publication et mention de la délivrance du brevet: **21.11.2018**
(21) Numéro de dépôt: 15823360.1
(22) Date de dépôt: 18.12.2015
(51) Int. Cl.: A47J 45/06, A47J 36/02

(54) **RÉCIPIENT DE CUISSON RÉALISÉ EN ALLIAGE D'ALUMINIUM ANODISÉ**
KOCHGEFÄSS AUS ANODISIERTER ALUMINIUMLEGIERUNG
COOKING VESSEL MADE OF ANODISED ALUMINIUM ALLOY

(30) Priorité: 30.12.2014 FR 1463447
(43) Date de publication de la demande: 08.11.2017
(73) Titulaire: SEB S.A., 69130 Ecully (FR)
(72) Inventeur: AUBIN, Laurent, 74150 Rumilly (FR); TUFFE, Stéphane, 73160 Cognin (FR)
(74) Mandataire: Bourrières, Patrice
(86) Numéro de dépôt international: PCT/FR2015/053640
(87) Numéro de publication internationale: WO 2016/108003

(56) Documents cités:
- EP-A2- 1 980 651
- WO-A1-2013/171408
- CN-A- 1 068 722

## Description

La présente invention concerne le domaine technique des appareils et ustensiles de cuisson comportant un récipient de cuisson.

La présente invention concerne plus particulièrement, mais non exclusivement, les articles culinaires tels que les casseroles, les poêles ou les woks, ainsi que les appareils électriques de cuisson comportant une cuve destinée à contenir les aliments.

Il est connu de réaliser des récipients de cuisson en alliage d'aluminium moulé, notamment en alliage AS12, dénommé aussi AISi12 (alliage d'aluminium de fonderie comportant 12% de silicium). Cet alliage peut être utilisé nu. Cet alliage peut également être utilisé avec un revêtement antiadhésif tel que le PTFE. Le revêtement antiadhésif peut notamment recouvrir la face intérieure de cuisson du récipient de cuisson. Le revêtement antiadhésif peut aussi notamment recouvrir la paroi latérale de la face extérieure du récipient de cuisson.

Dans de tels récipients de cuisson réalisés en alliage d'aluminium moulé, un inconvénient des surfaces non revêtues réside dans l'adhésion des aliments et/ou des graisses, ce qui rend le nettoyage de tels récipients de cuisson difficile.

L'utilisation d'un revêtement antiadhésif tel que le PTFE permet d'obtenir des propriétés d'anti-adhésivité. Toutefois un tel revêtement antiadhésif s'avère sensible à la rayure.

Un objet de la présente invention est de proposer un récipient de cuisson comportant une cuve moulée réalisée en alliage d'aluminium de fonderie, dans lequel le nettoyage de la paroi extérieure du récipient de cuisson est facilité, sans nécessiter l'utilisation d'un revêtement antiadhésif.

Un autre objet de la présente invention est de proposer un récipient de cuisson comportant une cuve moulée réalisée en alliage d'aluminium de fonderie, dans lequel les parois présentent un aspect uniforme sans nécessiter de revêtement.

Un objet additionnel de la présente invention est de proposer un récipient de cuisson comportant une cuve moulée réalisée en alliage d'aluminium de fonderie, qui comporte un revêtement antiadhésif, dans lequel les propriétés de résistance à la rayure du revêtement antiadhésif sont améliorées.

Ces buts sont atteints avec un récipient de cuisson selon la revendication 1 comportant une cuve moulée réalisée en alliage d'aluminium de fonderie, du fait que l'alliage d'aluminium de fonderie utilisé comporte au moins 94,5 % en masse d'aluminium et présente une teneur cumulée comprise entre 4 % et 5 % en masse pour les éléments suivants : silicium, manganèse, magnésium, nickel, et que la cuve est au moins partiellement anodisée, la cuve présentant une épaisseur de couche anodisée supérieure ou égale à 25 µm. Les alliages d'aluminium de fonderie sont usuellement considérés comme peu favorables à l'anodisation, du fait de la difficulté à faire croître la couche anodique et/ou à obtenir un aspect de surface uniforme. De manière surprenante, l'anodisation d'alliages d'aluminium de fonderie selon les caractéristiques précitées s'est avérée satisfaisante pour réaliser des cuves de récipient de cuisson, ces alliages permettant l'obtention d'une couche anodisée d'épaisseur suffisante. La cuve présente ainsi une anodisation dure, favorable à une bonne résistance à la rayure.

Avantageusement, la cuve présente une surface intérieure de cuisson comportant un revêtement antiadhésif, notamment en PTFE La couche anodique formée sous le revêtement antiadhésif permet d'obtenir une base dure qui améliore la résistance à la rayure du revêtement antiadhésif.

Selon un premier mode de réalisation, l'alliage d'aluminium de fonderie utilisé comporte entre 3,5 % et 4,2 % en masse de magnésium, et de préférence entre 3,7% et 4,0% en masse de magnésium.

Avantageusement alors, l'alliage d'aluminium de fonderie utilisé est un alliage AIMg3Ti comportant 0,25 % en masse de silicium, 0,48 % en masse de fer, 0,02 % en masse de cuivre, 0,012 % en masse de manganèse, 3,85 % en masse de magnésium, 0,07 % en masse de titane.

Selon un deuxième mode de réalisation, l'alliage d'aluminium de fonderie utilisé comporte entre 1,3% et 1,9% en masse de manganèse et entre 2,6 % et 3,2 % en masse de nickel, et de préférence entre 1,5% et 1,7% en masse de manganèse et entre 2,8 % et 3,0 % en masse de nickel.

Avantageusement alors, l'alliage d'aluminium de fonderie utilisé est un alliage AIMnNi comportant 0,07 % en masse de silicium, 0,19 % en masse de fer, 1,6 % en masse de manganèse, 2,9 % en masse de nickel, 0,12 % en masse de titane.

Selon un troisième mode de réalisation, l'alliage d'aluminium de fonderie utilisé comporte entre 3,8 % et 4,5 % en masse de silicium, et de préférence entre 4,0% et 4,3% en masse de silicium.

Avantageusement alors, l'alliage d'aluminium de fonderie utilisé est un alliage AISi4 comportant 4,15 % en masse de silicium, 0,55 % en masse de fer, 0,29 % en masse de manganèse, 0,1 % en masse de titane.

Avantageusement encore, pour obtenir un récipient de cuisson compatible avec un chauffage par induction, la cuve comporte au moins un insert réalisé en matériau ferromagnétique.

Avantageusement encore, l'alliage d'aluminium de fonderie utilisé est conforme à la norme européenne EN 601 :2004 concernant les alliages d'aluminium de moulage.

Avantageusement encore, l'épaisseur de la couche anodisée de la cuve est comprise entre 25 µm et 100 µm.

De préférence la couche anodisée présente une dureté Vickers supérieure ou égale à 350 HV, pour obtenir une anodisation dure.

Ces buts sont atteints aussi avec un article culinaire comportant un récipient de cuisson et un organe de préhension monté sur ledit récipient de cuisson, dans lequel ledit récipient de cuisson est conforme à l'une au moins des caractéristiques précitées.

Alors, selon une forme de réalisation, l'organe de préhension est fixé sur ledit récipient de cuisson par au moins un rivet.

Alors, selon une autre forme de réalisation, l'organe de préhension est assemblé par vissage sur ledit récipient de cuisson.

Ces buts sont atteints aussi avec un appareil électrique de cuisson, comportant un récipient de cuisson associé à des moyens de chauffe, dans lequel ledit récipient de cuisson est conforme à l'une au moins des caractéristiques précitées.

L'invention sera mieux comprise à l'étude d'exemples de réalisation, pris à titre nullement limitatif, illustrés dans les figures annexées, dans lesquelles :
- la figure 1 illustre un récipient de cuisson 1 selon l'invention,
- la figure 2 illustre un article culinaire 100 comportant un récipient de cuisson 1 selon l'invention,
- la figure 3 illustre de manière schématique un appareil électrique de cuisson 200 comportant un récipient de cuisson 1 selon l'invention.

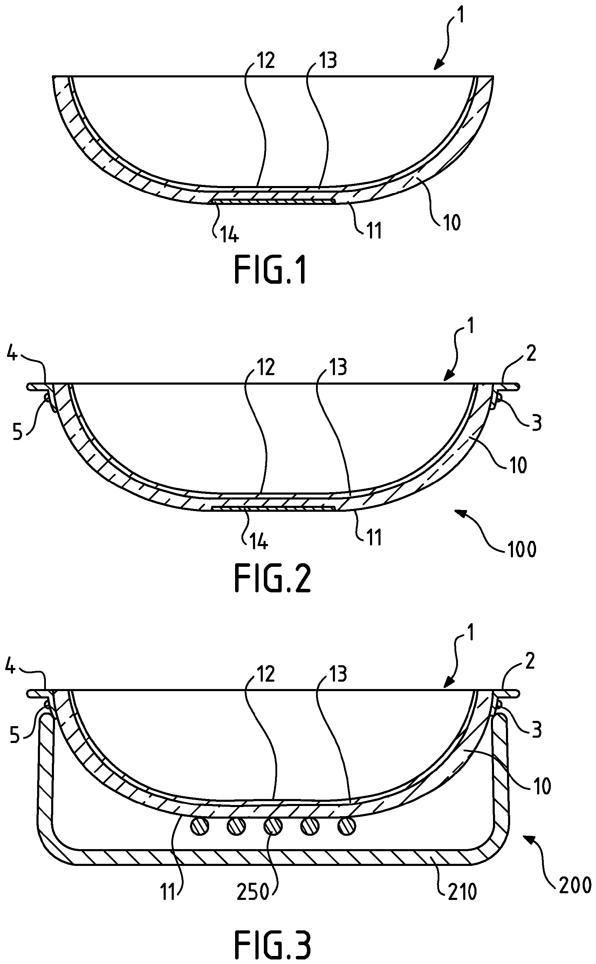

Le récipient de cuisson 1 illustré sur la figure 1 comporte une cuve 10 moulée réalisée en alliage d'aluminium de fonderie. La cuve 10 présente une surface intérieure de cuisson 12 prévue pour recevoir des aliments et une surface extérieure de chauffe 11 prévue pour reposer sur un support tel que par exemple un foyer de chauffe ou encore une grille de four ou une plaque de four.

La cuve 10 peut notamment être obtenue par les procédés de solidification entre coquilles, ou d'injection. Un traitement de surface après solidification de la cuve 10 est nécessaire afin d'éliminer les défauts, ce traitement de surface peut notamment être mécanique (brossage, sablage, grenaillage), ou chimique (bain de soude par exemple).

La cuve 10 peut être si désiré au moins partiellement revêtue. Dans l'exemple de réalisation illustré sur la figure 1, la surface intérieure de cuisson 12 comporte un revêtement antiadhésif 13. Le revêtement antiadhésif 13 peut notamment comporter une couche superficielle de PTFE (PolyTétraFluoroEthylène). Le revêtement antiadhésif 13 peut notamment être réalisé par enduction. Si désiré, un PTFE chargé peut être utilisé, pour améliorer la résistance de la surface intérieure de cuisson 12. Le revêtement antiadhésif 13 peut s'étendre sur toute la surface intérieure de cuisson 12. Le revêtement antiadhésif 13 peut aussi couvrir partiellement la surface intérieure de cuisson 12. La surface extérieure de chauffe 11 n'est pas nécessairement revêtue. Selon une forme de réalisation préférée, la surface extérieure de chauffe 11 n'est pas revêtue.

Si désiré la cuve 10 peut comporter au moins un insert 14 réalisé en matériau ferromagnétique, tel que par exemple un acier ferritique, pour réaliser un récipient de cuisson 1 susceptible d'être chauffé par induction. De préférence le matériau ferromagnétique est un acier inoxydable ferritique. Si désiré l'insert 14 réalisé en matériau ferromagnétique peut être formé par une plaque comportant une ou plusieurs perforations. L'insert 14 est de préférence partiellement recouvert par l'alliage d'aluminium moulé.

Selon l'invention, l'alliage d'aluminium de fonderie utilisé comporte au moins 94,5 % en masse d'aluminium et une teneur cumulée comprise entre 4 % et 5 % en masse pour les éléments suivants : silicium, manganèse, magnésium, nickel ; et la cuve 10 est au moins partiellement anodisée, la cuve 10 présentant une épaisseur de couche anodisée supérieure ou égale à 25 µm.

L'alliage d'aluminium de fonderie selon l'invention ne comporte pas nécessairement les quatre éléments silicium, manganèse, magnésium, nickel. En d'autres termes, la teneur cumulée comprise entre 4 % et 5 % en masse pour les éléments silicium, manganèse, magnésium, nickel correspond à la somme des teneurs massiques en silicium, en manganèse, en magnésium, en nickel, un, deux ou trois de ces éléments pouvant être absents de la composition de l'alliage.

De préférence, l'alliage d'aluminium de fonderie selon l'invention comporte du silicium. De préférence encore, l'alliage d'aluminium de fonderie selon l'invention comporte du manganèse.

La teneur cumulée des autres éléments est donc au plus égale à 1,5 % en masse. Les autres éléments peuvent notamment comprendre le fer et/ou le titane et/ou le cuivre. La teneur cumulée des autres éléments est de préférence comprise entre 0,2 et 0,8 % en masse.

L'insert 14 réalisé en matériau ferromagnétique peut notamment présenter au moins une partie apparente, qu'il convient de protéger par un masquage dans les bains chimiques acides, tels que notamment le ou les bains d'anodisation. Du fait du masquage, la cuve 10 est alors partiellement anodisée.

Le traitement d'anodisation peut notamment être réalisé par trempage dans un bain. L'anodisation de la cuve 10 est de préférence une anodisation dure conduisant à la formation d'une couche anodisée d'épaisseur supérieure ou égale à 25 µm avec une dureté Vickers supérieure ou égale à 350 HV. L'anodisation dure présente l'avantage d'une bonne résistance aux rayures et aux chocs. L'épaisseur de la couche anodisée de la cuve 10 est de préférence comprise entre 25 µm et 100 µm.

Selon un premier mode de réalisation, l'alliage d'aluminium de fonderie utilisé comporte entre 3,5 % et 4,2 % en masse de magnésium, et de préférence entre 3,7% et 4,0% en masse de magnésium. L'alliage d'aluminium de fonderie utilisé est alors par exemple un alliage AlMg3Ti comportant 0,25 % en masse de silicium, 0,48 % en masse de fer, 0,02 % en masse de cuivre, 0,12 % en masse de manganèse, 3,85 % en masse de magnésium, 0,07 % en masse de titane. Un ajustement de la teneur des éléments de l'alliage peut toutefois être envisagé en respectant la teneur en magnésium indiquée, ainsi que la teneur cumulée comprise entre 4 % et 5 % en masse pour les éléments silicium, manganèse, magnésium, nickel.

Selon un deuxième mode de réalisation, l'alliage d'aluminium de fonderie utilisé comporte entre 1,3% et 1,9% en masse de manganèse et entre 2,6 % et 3,2 % en masse de nickel, et de préférence entre 1,5% et 1,7% en masse de manganèse et entre 2,8 % et 3,0 % en masse de nickel. L'alliage d'aluminium de fonderie utilisé est alors par exemple un alliage AIMnNi comportant 0,07 % en masse de silicium, 0,19 % en masse de fer, 1,6 % en masse de manganèse, 2,9 % en masse de nickel, 0,12 % en masse de titane. Un ajustement de la teneur des éléments de l'alliage peut toutefois être envisagé en respectant les teneurs en manganèse et en nickel indiquées, ainsi que la teneur cumulée comprise entre 4 % et 5 % en masse pour les éléments silicium, manganèse, magnésium, nickel.

Selon un troisième mode de réalisation, l'alliage d'aluminium de fonderie utilisé comporte entre 3,8 % et 4,5 % en masse de silicium, et de préférence entre 4,0% et 4,3% en masse de silicium. L'alliage d'aluminium de fonderie utilisé est alors par exemple un alliage AISi4 comportant 4,15 % en masse de silicium, 0,55 % en masse de fer, 0,29 % en masse de manganèse, 0,1 % en masse de titane. Un ajustement de la teneur des éléments de l'alliage peut toutefois être envisagé en respectant la teneur en silicium indiquée, ainsi que la teneur cumulée comprise entre 4 % et 5 % en masse pour les éléments silicium, manganèse, magnésium, nickel.

L'alliage d'aluminium de fonderie utilisé est de préférence conforme à la norme européenne EN 601 :2004 se rapportant aux alliages d'aluminium de moulage pour contact alimentaire.

La figure 2 illustre un article culinaire 100 comportant un récipient de cuisson 1 et un organe de préhension 2 monté sur ledit récipient de cuisson 1.

Dans l'exemple de réalisation illustré sur la figure 2, l'organe de préhension 2 est fixé sur le récipient de cuisson 1 par au moins un rivet 3. A cet effet le rivet 3 est monté dans un trou ménagé dans la cuve 10 du récipient de cuisson 1. Si désiré plusieurs rivets 3 peuvent être utilisés pour fixer l'organe de préhension 2 sur le récipient de cuisson 1. De préférence entre deux et quatre rivets 3 sont utilisés pour fixer l'organe de préhension 2 sur le récipient de cuisson 1. Si désiré un autre organe de préhension 4 peut être fixé sur ledit récipient de cuisson 1 par au moins un autre rivet 5 ou par soudage.

En alternative, l'organe de préhension 2 peut notamment être assemblé par vissage sur le récipient de cuisson 1, par exemple au moyen d'une vis vissée dans un taraudage ménagé dans la paroi de la cuve 10.

La figure 3 illustre un appareil électrique de cuisson 200, comportant un récipient de cuisson 1 associé à des moyens de chauffe 250. Le récipient de cuisson 1 forme une cuve 10 agencée dans une base chauffante 210 comportant les moyens de chauffe 250. La face extérieure de la cuve 10 repose sur les moyens de chauffe 250. Si désiré la face extérieure de la cuve 10 peut être solidaire des moyens de chauffe 250.

La présente invention n'est nullement limitée aux exemples de réalisation décrits, mais englobe de nombreuses modifications dans le cadre des revendications.

## Revendications

1. Récipient de cuisson (1) comportant une cuve (10) moulée réalisée en alliage d'aluminium de fonderie, **caractérisé en ce que** l'alliage d'aluminium de fonderie utilisé comporte au moins 94,5 % en masse d'aluminium et présente une teneur cumulée comprise entre 4 % et 5 % en masse pour les éléments suivants : silicium, manganèse, magnésium, nickel, et **en ce que** la cuve (10) est au moins partiellement anodisée, la cuve (10) présentant une épaisseur de couche anodisée supérieure ou égale à 25 µm.

2. Récipient de cuisson (1) selon la revendication 1, **caractérisé en ce que** la cuve (10) présente une surface intérieure de cuisson (12) comportant un revêtement antiadhésif (13).

3. Récipient de cuisson (1) selon l'une des revendications 1 ou 2, **caractérisé en ce que** l'alliage d'aluminium de fonderie utilisé comporte entre 3,5 % et 4,2 % en masse de magnésium, et de préférence entre 3,7% et 4,0% en masse de magnésium.

4. Récipient de cuisson (1) selon l'une des revendications 1 à 3, **caractérisé en ce que** l'alliage d'aluminium de fonderie utilisé est un alliage AIMg3Ti comportant 0,25 % en masse de silicium, 0,48 % en masse de fer, 0,02 % en masse de cuivre, 0,012 % en masse de manganèse, 3,85 % en masse de magnésium, 0,07 % en masse de titane.

5. Récipient de cuisson (1) selon l'une des revendications 1 ou 2, **caractérisé en ce que** l'alliage d'aluminium de fonderie utilisé comporte entre 1,3% et 1,9% en masse de manganèse et entre 2,6 % et 3,2 % en masse de nickel, et de préférence entre 1,5% et 1,7% en masse de manganèse et entre 2,8 % et 3,0 % en masse de nickel.

6. Récipient de cuisson (1) selon l'une des revendications 1, 2 ou 5, **caractérisé en ce que** l'alliage d'aluminium de fonderie utilisé est un alliage AIMnNi comportant 0,07 % en masse de silicium, 0,19 % en masse de fer, 1,6 % en masse de manganèse, 2,9 % en masse de nickel, 0,12 % en masse de titane.

7. Récipient de cuisson (1) selon l'une des revendications 1 ou 2, **caractérisé en ce que** l'alliage d'aluminium de fonderie utilisé comporte entre 3,8 % et 4,5 % en masse de silicium, et de préférence entre 4,0% et 4,3% en masse de silicium.

8. Récipient de cuisson (1) selon l'une des revendications 1, 2 ou 7, **caractérisé en ce que** l'alliage d'aluminium de fonderie utilisé est un alliage AISi4 comportant 4,15 % en masse de silicium, 0,55 % en masse de fer, 0,29 % en masse de manganèse, 0,1 % en masse de titane.

9. Récipient de cuisson (1) selon l'une des revendications 1 à 8, **caractérisé en ce que** la cuve (10) comporte au moins un insert (14) réalisé en matériau ferromagnétique.

10. Récipient de cuisson (1) selon l'une des revendications 1 à 9, **caractérisé en ce que** l'alliage d'aluminium de fonderie utilisé est conforme à la norme européenne EN 601 :2004 concernant les alliages d'aluminium de moulage.

11. Récipient de cuisson (1) selon l'une des revendications 1 à 10, **caractérisé en ce que** l'épaisseur de la couche anodisée de la cuve (10) est comprise entre 25 µm et 100 µm.

12. Article culinaire (100) comportant un récipient de cuisson (1) et un organe de préhension (2) monté sur ledit récipient de cuisson (1), **caractérisé en ce que** ledit récipient de cuisson (1) est conforme à l'une des revendications 1 à 11.

13. Article culinaire (100) selon la revendication 12, **caractérisé en ce que** l'organe de préhension (2) est fixé sur ledit récipient de cuisson (1) par au moins un rivet (3).

14. Article culinaire (100) selon la revendication 12, **caractérisé en ce que** l'organe de préhension (2) est assemblé par vissage sur ledit récipient de cuisson (1).

15. Appareil électrique de cuisson (200), comportant un récipient de cuisson (1) associé à des moyens de chauffe (250), **caractérisé en ce que** ledit récipient de cuisson (1) est conforme à l'une des revendications 1 à 11.

## Patentansprüche

1. Kochgefäß (1), umfassend eine geformte Wanne (10), die aus Aluminiumgusslegierung ausgeführt ist, **dadurch gekennzeichnet, dass** die verwendete Aluminiumgusslegierung mindestens 94,5 Masse-% Aluminium umfasst und einen kumulierten Gehalt im Bereich zwischen 4 Masse-% und 5 Masse-% der folgenden Elemente aufweist: Silizium, Mangan, Magnesium, Nickel, und dadurch, dass die Wanne (10) mindestens teilweise anodisiert ist, wobei die Wanne (10) eine anodisierte Schichtdicke von größer als oder gleich 25 µm aufweist.

2. Kochgefäß (1) nach Anspruch 1, **dadurch gekennzeichnet, dass** die Wanne (10) eine innere Kochfläche (12) aufweist, die eine Antihaftbeschichtung (13) umfasst.

3. Kochgefäß (1) nach einem der Ansprüche 1 oder 2, **dadurch gekennzeichnet, dass** die verwendete Aluminiumgusslegierung zwischen 3,5 Masse-% und 4,2 Masse-% Magnesium, und vorzugsweise zwischen 3,7 Masse-% und 4,0 Masse-% Magnesium umfasst.

4. Kochgefäß (1) nach einem der Ansprüche 1 bis 3, **dadurch gekennzeichnet, dass** die verwendete Aluminiumgusslegierung eine AIMg3Ti-Legierung ist, die 0,25 Masse-% Silizium, 0,48 Masse-% Eisen, 0,02 Masse-% Kupfer, 0,012 Masse-% Mangan, 3,85 Masse-% Magnesium, 0,07 Masse-% Titan umfasst.

5. Kochgefäß (1) nach einem der Ansprüche 1 oder 2, **dadurch gekennzeichnet, dass** die verwendete Aluminiumgusslegierung zwischen 1,3 Masse-% und 1,9 Masse-% Mangan und zwischen 2,6 Masse-% und 3,2 Masse-% Nickel, und vorzugsweise zwischen 1,5 Masse-% und 1,7 Masse-% Mangan und zwischen 2,8 Masse-% und 3,0 Masse-% Nickel umfasst.

6. Kochgefäß (1) nach einem der Ansprüche 1, 2 oder 5, **dadurch gekennzeichnet, dass** die verwendete Aluminiumgusslegierung eine AlMnNi-Legierung ist, die 0,07 Masse-% Silizium, 0,19 Masse-% Eisen, 1,6 Masse-% Mangan, 2,9 Masse-% Nickel, 0,12 Masse-% Titan umfasst.

7. Kochgefäß (1) nach einem der Ansprüche 1 oder 2, **dadurch gekennzeichnet, dass** die verwendete Aluminiumgusslegierung zwischen 3,8 Masse-% und 4,5 Masse-% Silizium, und vorzugsweise zwischen 4,0 Masse-% und 4,3 Masse-% Silizium umfasst.

8. Kochgefäß (1) nach einem der Ansprüche 1, 2 oder 7, **dadurch gekennzeichnet, dass** die verwendete Aluminiumgusslegierung eine AISi4-Legierung ist, die 4,15 Masse-% Silizium, 0,55 Masse-% Eisen, 0,29 Masse-% Mangan, 0,1 Masse-% Titan umfasst.

9. Kochgefäß (1) nach einem der Ansprüche 1 bis 8, **dadurch gekennzeichnet, dass** die Wanne (10) mindestens einen Einsatz (14) umfasst, der aus ferromagnetischem Material ausgeführt ist.

10. Kochgefäß (1) nach einem der Ansprüche 1 bis 9, **dadurch gekennzeichnet, dass** die verwendete Aluminiumgusslegierung der europäischen Norm EN 601:2004 bezüglich der Aluminiumgießlegierungen entspricht.

11. Kochgefäß (1) nach einem der Ansprüche 1 bis 10, **dadurch gekennzeichnet, dass** die Dicke der anodisierten Schicht der Wanne (10) im Bereich zwischen 25 µm und 100 µm beträgt.

12. Küchenartikel (100), der ein Kochgefäß (1) und ein Griffelement (2) umfasst, das am Kochgefäß (1) montiert ist, **dadurch gekennzeichnet, dass** das Kochgefäß (1) einem der Ansprüche 1 bis 11 entspricht.

13. Küchenartikel (100) nach Anspruch 12, **dadurch gekennzeichnet, dass** das Griffelement (2) durch mindestens eine Niete (3) am Kochgefäß (1) befestigt ist.

14. Küchenartikel (100) nach Anspruch 12, **dadurch gekennzeichnet, dass** das Griffelement (2) durch Verschraubung am Kochgefäß (1) festgemacht ist.

15. Elektrische Kochvorrichtung (200), die ein zu Heizmitteln (250) gehöriges Kochgefäß (1) umfasst, **dadurch gekennzeichnet, dass** das Kochgefäß (1) einem der Ansprüche 1 bis 11 entspricht.

## Claims

1. Cooking vessel (1) including a moulded reservoir (10) made of aluminium casting alloy, **characterised in that** the aluminium casting alloy used includes at least 94.5% by weight of aluminium and has a total content of between 4% and 5% by weight for the following elements: silicon, manganese, magnesium, nickel, and that the reservoir (10) is at least partially anodised, the reservoir (10) having an anodised layer with a thickness greater than or equal to 25µm.

2. Cooking vessel (1) according to claim 1, **characterised in that** the reservoir (10) has an inner cooking surface (12) with a non-stick coating (13).

3. Cooking vessel (1) according to one of claims 1 or 2, **characterised in that** the aluminium casting alloy used includes between 3.5% and 4.2% by weight of magnesium, and preferably between 3.7% and 4.0% by weight of magnesium.

4. Cooking vessel (1) according to one of claims 1 to 3, **characterised in that** the aluminium casting alloy used is an AIMg3Ti alloy including 0.25% by weight of silicon, 0.48% by weight of iron, 0.02% by weight of copper, 0.012% by weight of manganese, 3.85% by weight of magnesium, and 0.07% by weight of titanium.

5. Cooking vessel (1) according to one of claims 1 or 2, **characterised in that** the aluminium casting alloy used includes between 1.3% and 1.9% by weight of manganese and between 2.6% and 3.2% by weight of nickel, and preferably between 1.5% and 1.7% by weight of manganese and between 2.8% and 3.0% by weight of nickel.

6. Cooking vessel (1) according to one of claims 1, 2, or 5, **characterised in that** the aluminium casting alloy used is an AIMnNi alloy including 0.07% by weight of silicon, 0.19% by weight of iron, 1.6% by weight of manganese, 2.9% by weight of nickel, and 0.12% by weight of titanium.

7. Cooking vessel (1) according to one of claims 1 or 2, **characterised in that** the aluminium casting alloy used includes between 3.8% and 4.5% by weight of silicon, and preferably between 4.0% and 4.3% by weight of silicon.

8. Cooking vessel (1) according to one of claims 1, 2 or 7, **characterised in that** the aluminium casting alloy used is an AISi4 alloy including 4.15% by weight of silicon, 0.55% by weight of iron, 0.29% by weight of manganese and 0.1% by weight of titanium.

9. Cooking vessel (1) according to one of claims 1 to 8, **characterised in that** the reservoir (10) includes at least one insert (14) made of ferromagnetic material.

10. Cooking vessel (1) according to one of claims 1 to 9, **characterised in that** the aluminium casting alloy used conforms to the European standard EN 601:2004 concerning aluminium casting alloys.

11. Cooking vessel (1) according to one of claims 1 to 10, **characterised in that** the thickness of the anodised layer of the reservoir (10) is between 25µm and 100µm.

12. Item of cookware (100) including a cooking vessel (1) and a gripping device (2) mounted on said cooking vessel (1), **characterised in that** said cooking vessel (1) conforms to one of the claims 1 to 11.

13. Item of cookware (100) according to claim 12, **characterised in that** the gripping device (2) is attached to said cooking vessel (1) with at least one rivet (3).

14. Item of cookware (100) according to claim 12, **characterised in that** the gripping device (2) is assembled by screwing onto said cooking vessel (1).

15. Electrical cooking appliance (200), including a cooking vessel (1) associated with heating means (250), **characterised in that** said cooking vessel (1) conforms to one of the claims 1 to 11.
